# EUROPEAN PATENT SPECIFICATION

(11) **EP 1 147 979 B1**
(45) Date of publication and mention of the grant of the patent: **05.09.2007**
(21) Application number: 00303344.6
(22) Date of filing: 19.04.2000
(51) Int. Cl.: B62M 17/00

(54) **Chainless transmit device for bikes**
Kettenlose Antriebsvorrichtung für Fahrrad
Dispositif d'entraînement sans chaîne pour bicyclette

(43) Date of publication of application: 24.10.2001
(73) Proprietor: Liu, Jen-Chih, Kaohsiung City (TW)
(72) Inventor: Liu, Jen-Chih, Kaohsiung City (TW)
(74) Representative: Pendered, Timothy George

(56) References cited:
- US-A- 5 078 416
- US-A- 5 116 070
- US-A- 5 158 314
- US-A- 5 482 306

## Description

### BACKGROUND OF THE INVENTION

This invention relates to a chainless transmit device for bikes, particularly to one adaptable to common chain transmit bikes without remodeling its body.

Common conventional bikes are generally provided with a chain extending around a chain gear fixed with a pedal shaft, and a chain gear fixed with a shaft of a rear wheel, but have various disadvantages such as the end of a pair of trousers or a skirt being pulled in by the chain in running a bike, the chain falling off the chain wheel, etc. So various proposals relating to a chainless transmit device for bikes have been disclosed in U. S. Patents in No. 3782210, No. 3861715, No. 3863503, No. 3872736, No. 3934481, No. 4005611, No. 4029332, No. 4436173, No. 447068. No. 4613010, No. 4813302, No. 48131889, No. 4943077, No. 5078416, No. 5228354, No. 5251504, No. 5299819, No. 5316327, No. 5342075, No. 5482306, No. 549609, No. 5622081, and a U. S. Design NO. 401538.

US 5 078 416, in particular, discloses a chainless transmit device as set out on the preamble of claim 1.

As is evident from the above ideas regarding chainless transmit devices for bikes, they generally have no mutual adaptability, are not compatible to common conventional chain transmit style bikes, need a special bike body to install a chainless transmit device on a bike, and cannot be adapted to common conventional bikes. The main impasse lies in the axle shafts of the gears (the axles of a large and a small gear engaging with each other are in line that is to say, they lie in the same horizontal plane). So the bike body has to be changed or remodeled in order to fix a chainless transmit device on the conventional bike, limiting their adaptability and versatility.

### SUMMARY OF THE INVENTION

This invention has been devised to offer a chainless transmit device for bikes which is very conveniently adaptable to common conventional chain transmit bikes without need to change a bike body, only requiring fitting of the chainless transmit device on the conventional bike.

According to the present invention there is provided a chainless transmit device for bikes according to claim 1. Preformed further features are set forth in claims 2 to 5.

### BRIEF DESCRIPTION OF DRAWINGS

This invention will be better understood by referring to the accompanying drawings, wherein:
Figure 1 a side view of a conventional chain transmit bike;
Figure 2 is a side view of a conventional chain transmit bike adapted by replacement of its chain transmit device with a chainless transmit device of the present invention;
Figure 3 is an upper view of a chainless transmit device for a bike assembled on a bike in one way in the present invention; and,
Figure 4 is an upper view of a chainless transmit device for a bike assembled on a bike in another way in the present invention.

### DETAILED DESCRIPTION OF THE PREFERRED EMBODIMENT

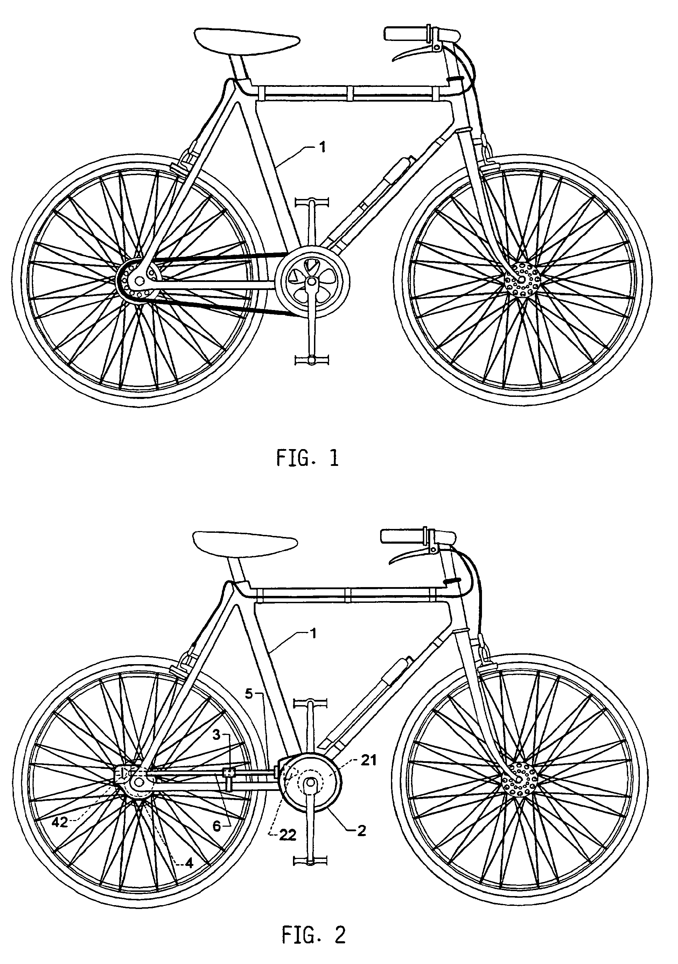

A preferred embodiment of a chainless transmit device for a bike in the present invention, as shown in Fig. 2 is fixed on a conventional bike having chain transmit device replaced with the chainless transmit device in the invention, without changing or modifying the body of the bike.

The chainless transmit device for a bike includes a front bevel gear unit 2, a rear bevel gear unit 4, a flexible transmit means 5 or a rigid transmit means 6 connecting the front bevel gear unit 2 and the rear bevel gear unit 4.

The front bevel gear unit 2 consists of a large bevel gear 21 and a small bevel gear 22 engaging with each other, and a housing hiding them.

The rear bevel gear unit 4 consists of a large bevel gear 41 and a small bevel gear 42.

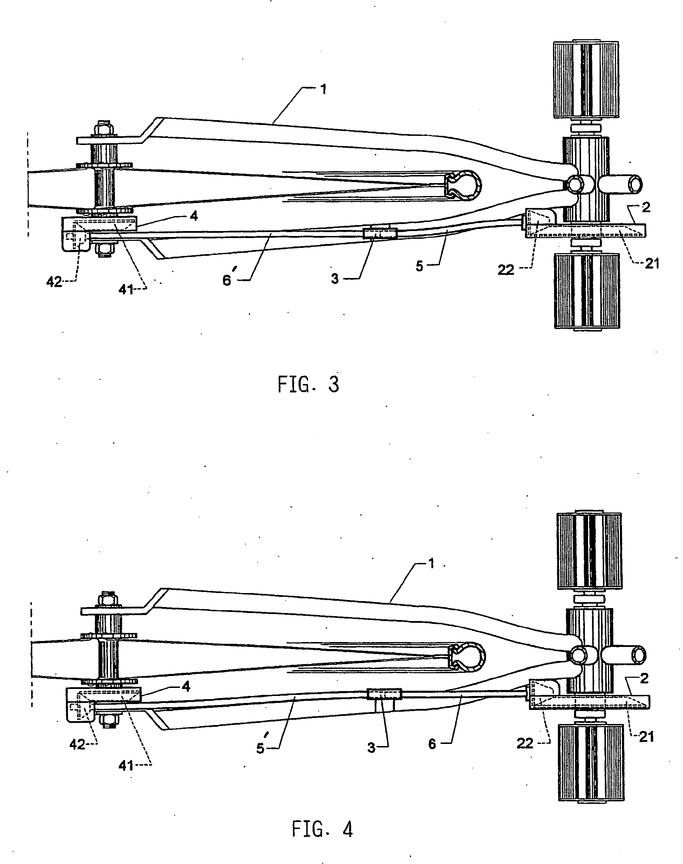

Figs. 3 and 4 show two ways by which the chainless transmit device is fixed on a body of a bike. The large bevel gear 21 is fixed on the shaft of a pedal, with the sloped gear surface facing inside, engaging the sloped gear surface of the small gear 22, so their axles cross each other at a right angle but do not intersect, that is to say, do not lie in the same horizontal plane. Then an output shaft of the small bevel gear 22 is connected with a first flexible transmit means 5 or a first rigid transmit means 6 to transmit revolution of the small bevel gear 22.

The large bevel gear 41 of the rear bevel gear 4 is fixed on the shaft of a rear wheel, engaging the small bevel gear 42, which has its input shaft connected to a second flexible transmit means 5' or a second rigid transmit means 6'. Then the first flexible and the second rigid transmit means 5, 6' or the second flexible and first rigid transmit means 5', 6 are connected with each other with a coupling means 3 to transmit revolution of the front bevel gear 2 to the rear bevel gear to rotate the rear wheel.

The chainless transmit device in the invention has the following advantages, as can be understood by the aforesaid description and the accompanying drawings.
1. It is compatible with a common conventional chain transmit bike, by replacing the large chain wheel with the front bevel gear unit and the small chain wheel of the rear wheel with the rear bevel gear unit without changing or modifying the body of the conventional bike.
2. A bike with the chainless transmit device may be manufactured or conventional chain transmit bikes may be converted into chainless transmit bikes.
3. It can overcome the restriction of the need for a special body because it is usable to adapt a common conventional bike.
4. It can reduce the investment necessary for the manufacture of chainless transmit bikes, thereby enhancing industrial worth and benefit, and offering the possibility for owners of common conventional chain transmit bikes to convert them into chainless transmit ones.

While the preferred embodiment of the invention has been described above, it will be recognized and understood that various modifications may be made therein without departing from the scope of the invention as defined by the appended claims.

## Claims

1. A chainless transmit device for bikes comprising a front bevel gear unit (2), a rear bevel gear unit (4), said front bevel gear unit having a large bevel gear (2) fixable on the shaft of a pedal and engaging a small bevel gear (22), said rear bevel gear unit having a large bevel gear (41) fixable on the shaft of a rear wheel of a bike and engaging a small bevel gear (42), said front small bevel gear having its output shaft connected with a first flexible transmit means (5) or a first rigid transmit means (6), connected respectively with a second rigid transmit means (6') or a second flexible transmit means (5') connected to said rear small bevel gear so as to transmit revolution of said front bevel gear unit to said rear bevel gear unit, permitting rotation of said pedal to rotate said rear wheel to propel said bike, and **characterized in that** said front large bevel gear and said front small bevel gear do not engage with their axes intersecting but by respective gear surfaces configured so that the axes of both said front bevel gears are not in a common horizontal plane, and likewise the axes of both said rear bevel gears are not in a common horizontal plane.

2. A chainless transmit device for bikes as claimed in Claim 1, wherein said front small bevel gear has its output shaft connected with said first flexible transmit means (5).

3. A chainless transmit device for bikes as claimed in Claim 1, wherein said front small bevel gear has its output shaft connected to said first rigid transmit means (6).

4. A chainless transmit device for bikes as claimed in Claim 1, wherein said rear small bevel gear has its input shaft connected to said second flexible transmit means (5').

5. A chainless transmit device for bikes as claimed in Claim 1, wherein said rear small bevel gear has its input shaft connected to said second rigid transmit means (6').

## Patentansprüche

1. Kettenlose Antriebsvorrichtung für Fahrräder, umfassend eine vordere Kegelradeinheit (2), eine hintere Kegelradeinheit (4), wobei die vordere Kegelradeinheit ein großes Kegelrad (2) aufweist, welches an der Welle eines Pedals befestigbar ist und in ein kleines Kegelrad (22) eingreift, wobei die hintere Kegelradeinheit ein großes Kegelrad (41) aufweist, welches an der Welle eines Hinterrades befestigbar ist und in ein kleines Kegelrad (42) eingreift, wobei das vordere kleine Kegelrad seine Abtriebswelle mit einem ersten biegsamen Übertragungsmittel (5) oder einem ersten steifen Übertragungsmittel (6) verbunden hat, welches jeweils mit einem zweiten steifen Übertragungsmittel (6') oder einem zweiten biegsamen Übertragungsmittel (5') verbunden ist, welches wiederum mit dem hinteren kleinen Kegelrad verbunden ist, um so die Umdrehung der vorderen Kegelradeinheit auf die hintere Kegelradeinheit zu übertragen, wobei die Drehung des Pedals das Hinterrad drehen kann, um das Fahrrad voran zu bewegen, und **dadurch gekennzeichnet, dass** das vordere große Kegelrad und das vordere kleine Kegelrad nicht eingreifen, wenn sich ihre Achsen schneiden, sondern durch jeweilige Zahnradflächen, die so konfiguriert sind, dass die Achsen beider vorderer Kegelräder sich nicht in einer gemeinsamen horizontalen Ebene befinden, und auf gleiche Weise die Achsen beider hinterer Kegelräder sich nicht in einer gemeinsamen horizontalen Ebene befinden.

2. Kettenlose Antriebsvorrichtung für Fahrräder gemäß Anspruch 1, wobei das vordere kleine Kegelrad seine Abtriebswelle mit dem ersten biegsamen Übertragungsmittel (5) verbunden aufweist.

3. Kettenlose Antriebsvorrichtung für Fahrräder gemäß Anspruch 1, wobei das vordere kleine Kegelrad seine Abtriebswelle mit dem ersten steifen Übertragungsmittel (6) verbunden aufweist.

4. Kettenlose Antriebsvorrichtung für Fahrräder gemäß Anspruch 1, wobei das hintere kleine Kegelrad seine Antriebswelle mit dem zweiten biegsamen Übertragungsmittel (5') verbunden aufweist.

5. Kettenlose Antriebsvorrichtung für Fahrräder gemäß Anspruch 1, wobei das hintere kleine Kegelrad seine Antriebswelle mit dem zweiten steifen Übertragungsmittel (6') verbunden aufweist.

## Revendications

1. Dispositif de transmission sans chaîne pour bicyclettes, comprenant une unité d'engrenage conique avant (2) et une unité d'engrenage conique arrière (4), ladite unité d'engrenage conique avant comportant une grande roue dentée conique (21) apte à être fixée sur l'arbre d'une pédale et engrenant avec une petite roue dentée conique (22), tandis que ladite unité d'engrenage conique arrière comporte une grande roue dentée conique (41) apte à être fixée sur l'arbre d'une roue arrière d'une bicyclette et engrenant avec une petite roue dentée conique (42), ladite petite roue dentée conique avant ayant son arbre de sortie relié à un premier moyen de transmission flexible (5) ou à un premier moyen de transmission rigide (6) respectivement reliés à un second moyen de transmission rigide (6') ou à un second moyen de transmission flexible (5') relié à ladite petite roue dentée conique arrière afin de transmettre une rotation de ladite unité d'engrenage conique avant à ladite unité d'engrenage conique arrière pour qu'une rotation de ladite pédale puisse faire tourner ladite roue arrière afin de propulser ladite bicyclette, et **caractérisé en ce que** ladite grande roue dentée conique avant et ladite petite roue dentée conique avant n'engrènent pas grâce à l'intersection de leurs axes mais du fait que leurs surfaces dentées respectives sont configurées pour que les axes des deux roues dentées coniques avant ne soient pas dans un plan horizontal commun, de même que les axes desdites deux roues dentées coniques arrière ne sont pas dans un plan horizontal commun.

2. Dispositif de transmission sans chaîne pour bicyclettes tel que défini dans la revendication 1, dans lequel ladite petite roue dentée conique avant a son arbre de sortie relié audit premier moyen de transmission flexible (5).

3. Dispositif de transmission sans chaîne pour bicyclettes tel que défini dans la revendication 1, dans lequel ladite petite roue dentée conique avant a son arbre de sortie relié audit premier moyen de transmission rigide (6).

4. Dispositif de transmission sans chaîne pour bicyclettes tel que défini dans la revendication 1, dans lequel ladite petite roue dentée conique arrière a son arbre d'entrée relié audit second moyen de transmission flexible (5').

5. Dispositif de transmission sans chaîne pour bicyclettes tel que défini dans la revendication 1, dans lequel ladite petite roue dentée conique arrière a son arbre d'entrée relié audit second moyen de transmission rigide (6').
